# EUROPEAN PATENT SPECIFICATION

(11) **EP 2 972 495 B1**
(45) Date of publication and mention of the grant of the patent: **11.04.2018**
(21) Application number: 14765776.1
(22) Date of filing: 28.02.2014
(51) Int. Cl.: G01S 19/49, G01S 19/14, G01S 3/786, H04N 7/18

(54) **SYSTEM AND METHOD FOR AUGMENTING A GNSS/INS NAVIGATION SYSTEM OF A LOW DYNAMIC VESSEL USING A VISION SYSTEM**
SYSTEM UND VERFAHREN ZUR ERGÄNZUNG EINES GNSS/INS-NAVIGATIONSSYSTEMS EINES SCHIFFES MIT NIEDRIGER DYNAMIK MITHILFE EINES SICHTSYSTEMS
SYSTÈME ET PROCÉDÉ D'AUGMENTATION DE CAPACITÉ D'UN SYSTÈME DE NAVIGATION GNSS/INS D'UN NAVIRE À FAIBLE DYNAMIQUE AU MOYEN D'UN SYSTÈME DE VISION

(30) Priority: 15.03.2013 US 201313838316
(43) Date of publication of application: 20.01.2016
(73) Proprietor: NovAtel Inc., Calgary, Alberta T2E 8S5 (CA)
(72) Inventor: MORIN, Kristian, Calgary, Alberta T2M 2W5 (CA)
(74) Representative: Kaminski Harmann
(86) International application number: PCT/CA2014/050151
(87) International publication number: WO 2014/138950

(56) References cited:
- EP-A2- 1 862 763
- WO-A2-2008/009966
- US-A1- 2006 074 558
- US-A1- 2011 054 787
- US-A1- 2011 054 787
- US-A1- 2012 163 656

## Description

### FIELD OF THE INVENTION

The present invention relates generally to GNSS/INS receivers and more particularly to GNSS/INS receivers for low dynamic vessels.

### BACKGROUND OF THE INVENTION

Oceangoing vessels typically utilize some form of satellite navigation system, such as a GNSS system. The GNSS system may be paired with an inertial navigation system (INS) for improved accuracy. The combined GNSS/INS system provides current location and navigation information that may be utilized by the captain and/or crew of the vessel to navigate safely. The INS system may aid in navigation when the GNSS system loses accuracy. The GNSS system may lose accuracy when, e.g., multipath situations occur. A multipath situation occurs when, e.g., signals transmitted from GNSS satellites are reflected by local terrain and/or buildings, thereby resulting in a plurality of signals being received by the GNSS receiver. Due to the plurality of signals being received, each of which may be phase shifted and/or time delayed, the GNSS receiver may not be able to accurately detect its location.

Low dynamic vessels may provide serious challenges for INS systems. As used herein, a low dynamic vessel generally means a vessel that is moving at a low velocity and/or experiencing small dynamic sensations, such as pitch/roll. In a low dynamic environment, the INS system may not provide accurate navigation information to the combined GNSS/INS system. Thus, if the GNSS system also loses accuracy, such as due to entering a multipath environment, the overall navigation system for the vessel may be severely hindered in its accuracy. This may be problematic when, e.g., a vessel is entering a harbor or other environment where precise navigation is required. During harbor entry, the vessel is typically moving at a low velocity, thereby rendering the INS system less accurate. Concurrently, multipath issues with the harbor may similarly render the GNSS system less accurate. As will be appreciated by those skilled in the art, loss of accurate navigation information during harbor entry may be problematic due to the plurality of navigation obstacles typically found within a harbor environment.

Determining a location of a vehicle on a map by means of a GNSS/INS/camera arrangement and using images captured by the camera of the arrangement is described in WO 2008/009966 A2. US 2011/0054787 A1 discloses a weighting of signals from an INS/camera arrangement for context determination to assist location determination accuracy using location aware mobile devices.

### SUMMARY OF THE INVENTION

The disadvantages of the prior art are overcome by providing a novel GNSS/inertial navigation system (INS) that is augmented by a vision system to provide accurate navigation and location information for low dynamic vessels. A vision system is utilized in conjunction with the GNSS/INS system to obtain additional location information when the vessel is operated in a low dynamic environment, e.g., when operating at a low velocity. Illustratively, the vision system analyzes an obtained image from an image acquisition device having a fixed field of view to calculate a horizon within the acquired image. From the calculated horizon within the acquired image, the vision system then determines the pitch and/or roll of the vessel. Furthermore, if navigation targets, such as buoys at known locations or geographic features at known locations, are within the fixed field of view, the vision system may track them as they move between consecutively acquired images to determine heading and/or velocity information.

The location from the GNSS system, the INS system and the vision system is input into a Kalman filter that illustratively lowers the weighting of INS information in low dynamic environments and raises the weighting of the vision system information in a low dynamic environment. When operating in a non-low dynamic environment, such as when the vessel is operating at a high velocity in e.g., the open ocean, the weightings are reversed, i.e., a higher weighting for the INS information and lower weighting for the vision system information.

### BRIEF DESCRIPTION OF THE DRAWINGS

The above and further advantages of the present invention are explained in relation to the following figures in which like reference numerals indicate similar functional or structural components, of which:
Fig. 1 is a side view of an exemplary low dynamic vessel that may be utilized in accordance with an illustrative embodiment of the present invention;
Fig. 2 is a diagram of an exemplary navigation environment in accordance with an illustrative embodiment of the present invention;
Fig. 3 is a functional block diagram of a GNSS/INS navigation system and vision system that may be utilized in accordance with an illustrative embodiment of the present invention;
Fig. 4 is an exemplary acquired image from an image acquisition device from which roll and pitch information may be calculated in accordance with the illustrative embodiment of the present invention;
Fig. 5A is an exemplary image that may be used for tracking features for determining headings in accordance with an illustrative embodiment of the present invention;
Fig. 5B is an exemplary image that may be used for tracking features for determining headings in accordance with an illustrative embodiment of the present invention;
Fig. 6A is an exemplary image illustrating tracking targets in accordance with an illustrative embodiment of the present invention;
Fig. 6B is an exemplary image illustrating tracking targets in accordance with an illustrative embodiment of the present invention;
Fig. 7A is an exemplary schematic diagram showing the calculation of angles to targets for determining heading and/or velocity information in accordance with an illustrative embodiment of the present invention;
Fig. 7B is an illustrative schematic diagram showing the calculation of angels to targets for determining heading and/or velocity information in accordance with an illustrative embodiment of the present invention; and
Fig. 8 is an exemplary flowchart detailing the steps of a procedure for a GNSS/INS navigation system to be augmented by a vision system in accordance with an illustrative embodiment of the present invention.

### DETAILED DESCRIPTION OF AN ILLUSTRATIVE EMBODIMENT

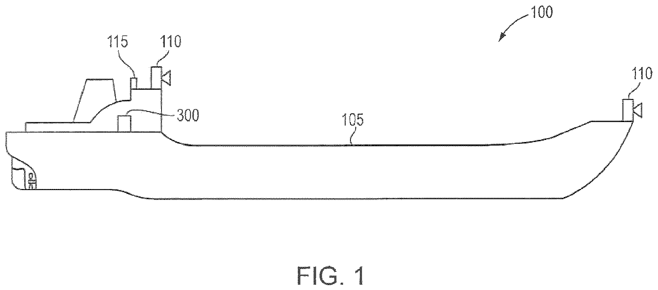

Fig. 1 is a side view of an exemplary low dynamic vessel 105, e.g., a ship, environment 100 in which the principles of the present invention may be utilized in accordance with an illustrative embodiment of the present invention. It should be noted that while the exemplary portrayed image of vessel 105 is a very large tanker/cargo carrying vessel, the principles of the present invention are not limited to such vessels. As such, descriptions contained herein of the low dynamic vessel 105 being of any particular size and/or class of vessel should be taken as exemplary only.

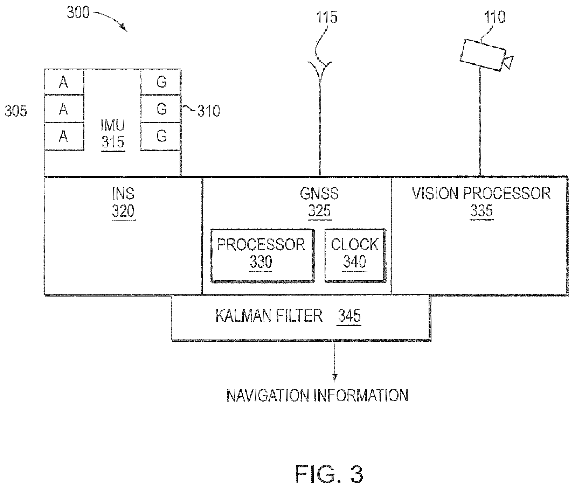

The vessel 105 illustratively includes a GNSS/INS navigation system 300, describe further below in reference to Fig. 3, an antenna 115 that may be utilized with the GNSS system, and one or more image acquisitions devices 110, such as video cameras. It should be noted that in the exemplary Fig. 1, two image acquisition devices 110 are shown. However, in alternative embodiments, additional and/or differing numbers of image acquisition devices 110 may be utilized. As such, the description of two image acquisition devices 110 should be taken as exemplary only.

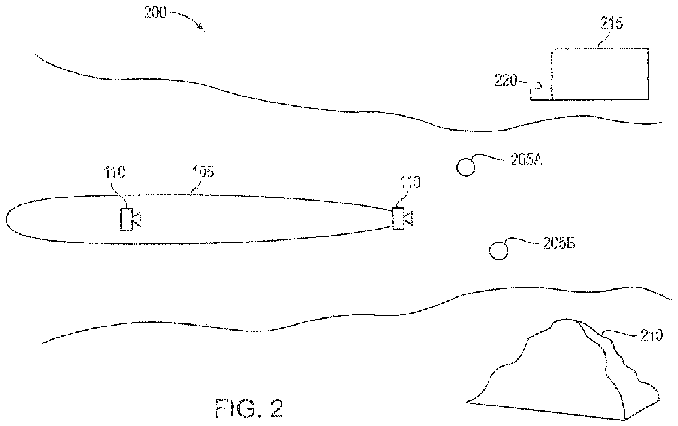

Fig. 2 is a diagram of an exemplary navigation environmental 200 in which the principles of the present invention may be utilized in accordance with an illustrative embodiment of the present invention. The navigation environment 200 is centered around a low dynamic vessel 105. Illustratively, one or more image acquisition devices 110 are mounted on the low dynamic vessel 105 for acquiring images of the navigation environment 200 which may be utilized to augment a GNSS/INS navigation system in accordance with an illustrative embodiment of the present invention.

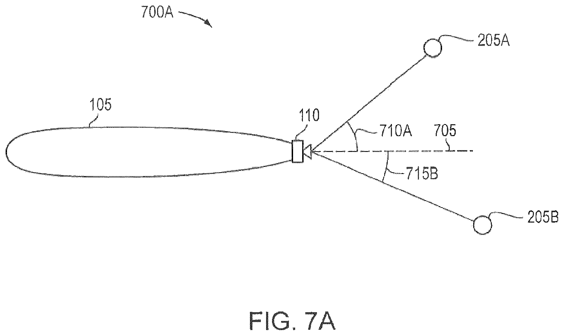

Navigation environment 200 is exemplary shown as a narrow channel such as what may be encountered in a harbor or other restricted navigational area in which accurate navigation information is required. A set of navigation targets 205A, B are shown within the channel. Illustratively, navigation targets 205 may comprise a buoy moored at a known and predefined geographic location. The vision system, by detecting changes in the location of the navigation targets 205 between acquired images taken at different points in time, may calculate the vessel's heading, as described further below in reference to Figs. 7A-7B. Further, a geographic feature 210, such as a mountain, may be within the navigation environment 200. It should be noted that while a mountain is shown as an exemplary geographic feature 210 in the navigation environment 200, the principles of the present invention may utilize any geographic feature that may be discerned using an image acquisition device and/or an image processor. As such, the description of geographic feature 210 comprising a mountain should be taken as exemplary only. Further, man made features 215, such as an exemplary building, may be utilized as targets. In alternative embodiments, man-made features 215 may further comprise targets 220 mounted thereon to enable accurate navigation information to be obtained. For example, a building 215 may have a vision target 220 affixed at a predefined location thereon. As the location of the target 220 is known, the vision system, described further below in reference to Fig. 3, may more accurately determine navigation and/or location information in accordance with an illustrative embodiment of the present invention. Illustratively, the vision system may utilize geographic features 210 and/or man made features 215 including targets 220 to determine heading and/or velocity associated with the vessel. Such calculations are described below in relation to Figs. 7A-B.

The low dynamic vessel 105 illustratively utilizes a GNSS/INS system 300 that provides location and navigation information regarding the low dynamic vessel 105 in accordance with an illustrative embodiment of the present invention. In alternative environments, a GNSS-only or INS-only navigation system may be utilized. However, for improved precision and accuracy, a combined GNSS/INS system is typically utilized. As such, the description of GNSS/INS system should be taken as exemplary only. One exemplary GNSS/INS system is described in United States Patent No 6,721,657, entitled INERTIAL GPS NAVIGATION SYSTEM, by Thomas J. Ford, et al, issued on April 13, 2004, the contents of which are hereby incorporated by reference.

Fig. 3 is a schematic block diagram of an exemplary navigation system, illustratively embodied as a GNSS/INS system 300 and vision processor 335 in accordance with an illustrative embodiment of the present invention. The GNSS/INS system 300 includes an INS sub-system 320 and a GNSS sub-system 325 that operate under the control of a processor 330, to calculate GNSS position and INS position, velocity and attitude information. The GNSS subsystem processes the satellite signals received over the antenna 115. The INS system receives measurements from an inertial measuring unit ("IMU") 315 that reads data from orthogonally positioned accelerometers 305 and gyroscopes 310. The data from the IMU is time tagged by the GNSS clock 340. The GNSS and INS systems can thus reliably interchange position-related information that is synchronized in time. The two systems operate together, through software integration in the processor 330, to provide position-related information between the systems.

For ease of understanding, the description of the processing operations of the two systems are made without specific reference to the processor 330. The system may instead include dedicated GNSS and INS sub-processors that communicate with one another at appropriate times to exchange information that is required to perform the various GNSS and INS calculation operations discussed below. For example, the INS sub-processor communicates with the GNSS processor when IMU data is provided to the sub-processor, in order to time-tag the data with GNSS time. Further, the GNSS sub-processor communicates with the INS sub-processor to provide GNSS position information at the start of each measurement interval, and so forth.

At start-up, the GNSS system 325 operates in a known manner to acquire the signals from at least a minimum number of GNSS satellites and calculate pseudoranges to the respective satellites and associated Doppler rates. Based on the pseudoranges, the GNSS system determines its position relative to the satellites. The GNSS system may also determine its position relative to a fixed-position base receiver (not shown), either through the use of differential correction measurements generated at the base station or after resolving associated carrier cycle ambiguities.

At the same time, the INS system 320 processes the IMU data, that is, the measurements from the various accelerometers 305 and gyroscopes 310, to determine the initial attitude and velocity of the receiver. The INS system further processes both the IMU data and the GNSS position and associated covariance information to set up various matrices for a Kalman filter 345. At the start of each measurement interval, the INS subsystem updates the Kalman filter and provides updated error states to a mechanization process. The mechanization process uses the updated information and the IMU data to propagate, over the measurement interval, the inertial position, attitude and velocity, with the inertial position and other system element errors being controlled with GNSS positions at the start of the measurement interval.

The IMU 315 plugs into a port (not shown) of the processor 330 and through the port supplies accelerometer and gyroscope measurement data to the processor. The IMU may be selected from a number of models and/or types, each associated with a different scaling factor and nominal accelerometer and gyroscope bias levels. The user may select a particular IMU model for navigation operations based on price and/or on the particular characteristics of the IMU.

At start-up, the INS system must thus determine which IMU is connected to the processor 330, in order to ensure that the IMU measurements are scaled correctly, and also to assign initial uncertainties to the attitude calculations. The INS system tests for a particular IMU by determining the scale factor associated with the accelerator measurements. The process thus compares a ratio of the magnitude of the normal gravity vector and the length of the scaled acceleration vector with stored ratios associated with the various IMU scale factors and selects the appropriate model/type.

A generic Kalman filter 345 processes estimates a series of parameters that describe and predict the behavior of a system. The Kalman filter 345 operates with a set of state variables that describe errors in the system and an associated variance covariance matrix that describes the current knowledge level of the state. The Kalman filter 345 maintains an optimal estimate of the system errors and associated covariance over time and in the presence of external measurements through the use of propagation and updating processes.

To propagate the state and its covariance from some past time to the current time, the Kalman filter propagation uses knowledge of the state dynamic behavior determined from the physics of the system and the stochastic characteristics of the system over time. Kalman filter updates thus uses the linear relationship between the state and observation vectors in conjunction with the covariance matrices related to those vectors to determine corrections to both the state vector and the state covariance matrix.

As noted above, the description contained herein comprises an exemplary embodiment of a GNSS/INS system. It is expressly noted that the principles of the present invention may be utilized with any system capable of providing real time location and navigation information for a heavy equipment vehicle. As such, the description contained herein should be taken as exemplary only.

An image acquisition device, such as camera 110, obtains one or more images of a fixed field of view. Illustratively, the camera 110 obtains a plurality of images of its fixed field of view every second. The images are conveyed to a vision processor 335 that executes software (not shown) for calculating navigation and location information described further below. Illustratively, the vision processor 335 is operatively connected to the clock 340 so that acquired images may be time stamped to a common clock that is also utilized for the GNSS and INS measurements. This enables the vision processor 335 to provide location and navigation information at a particular point in time that is synchronized with the GNSS/INS system. In one illustrative embodiment, the clock 340 operates as a master clock to which the GNNS, INS and vision systems are slaves.

In operation, the INS system 320 generates inertial location information, the GNSS system 325 generates GNSS location information and the vision processor 335 generates vision system location information. All three sets of location information are fed into the Kalman filter 345. As will be appreciated by those skilled in the art, the Kalman filter 345 weights various inputs to generates a set of output location information. In accordance with an illustrative embodiment of the present invention, the Kalman filter 345 lowers the weighting of the inertial location information when the vessel 105 enters a low dynamic environment. Additionally, when entering a low dynamic environment, the Kalman filter 345 increased the weighting of the vision system location information. That is, as the vessel enters the low dynamic environment, the navigation system illustratively compensates for the potential loss of accuracy in the inertial system by de-weighting the information from the inertial system. Conversely, when a vessel then enters a non-low dynamic environment, the inertial system will improve in accuracy and therefore its weighting is increased while the vision system's weighting is decreased.

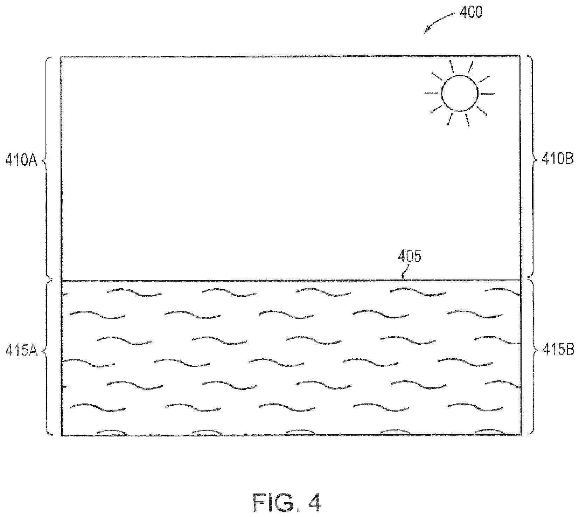

Fig. 4 is exemplary image 400 that may be acquired by the image acquisition device 110 in accordance with an illustrative embodiment of the present invention. The image acquisition device 110 forwards the acquired image 400 to vision processor 335. The vision processor 335 then performs conventional image processing operations on the acquired image to determine a horizon line 405. Illustratively, the horizon line 405 represents the line between the sky and the earth and/or body of water within the field of view of the image acquisition device that acquired the image 400. The horizon line 405 may be determined using such techniques as analyzing changes in color between the sky and body of water, or, in alternative embodiments using edge detection techniques. As such, the description of identifying the horizon line 405 using any specific technique should be taken as exemplary only.

The vision processor 335 then analyzes the acquired image 400 and determined horizon line 405 to determine roll information relating to the vessel. As used herein, the roll of a vessel is the amount that the vessel is a rotating along an axis running in the vessel's direction of travel. That is, to an observer on the vessel, the roll of the vessel is how far the vessel is leaning to port or starboard (left or right) around a central axis of the vessel. Illustratively, the vision processor determines the height 410 above the horizon 405. The height 410 above the horizon 405 represents the amount of the fixed field of view of the image acquisition device that is above the horizon line 405. Illustratively, the height is obtained at both the left 410A and right 410B sides of the acquired image 400. Similarly, the vision processor 335 identifies an amount of the image 400 below 415 the horizon line 405. This amount below 415 the horizon line 405 is also illustrative calculated for both the left 415A and right 415B sides of the acquired image 400.

By calculating the amount of the image above 410 and below 415 the horizon line 405 on both the left and right sides of the image 400, the vision processor 335 may determine the roll of the vessel. The slope of the horizon line represents the current roll of the vessel. For example if the vessel is running perfectly level with no roll, then the amount of the image above the horizon line 405 on both the left 410A and right 410B sides of the image will be equal. However, if the vessel is rolling to the left (or port side) of the vessel, then the amount above the horizon line 405 on the left side 410A will be larger than the amount above the horizon line 405 on the right side 410B. Similarly, if the vessel is rolling to the right (or starboard) side of the vessel, then the amount above the horizon line 405 on the left side 410A will be less than the amount on the right side 410B.

As will be appreciated by those skilled in the art, these calculations may be performed using only the amount above the horizon line 410. However, by also calculating the amount below the horizon line 415, an additional check may be performed. Further, the calculations may be performed using only the amount of the image below the horizon line 415. Additionally, in an alternative embodiment, once the horizon line has been determined, the calculation is performed using the horizon line to determine its slope and therefore the roll of the vessel without requiring a calculation of the amount above 410 or below 415 the horizon line 405. As such, the description of calculating roll information based on the amount above/below the horizon line should be taken as exemplary only.

In accordance with an illustrative embodiment of the present invention, the vision system acquires a plurality of images 400. By calculating changes in the horizon line 405 over time, the vision system may determine the pitch of the vessel. That is, as the image acquisition devices are fixed to the vessel and have a fixed field of view, changes in the horizon line up and down within the acquired image represents an up or down motion of the vessel. Collectively, this pitch information may be obtained by measuring the height below the horizon line 415 between consecutively acquired images. As used herein, the pitch of the vessel represents the rotation of the vessel around an axis perpendicular to its roll access. Typically, the pitch of the vessel determines how far up or down the bow of the vessel is as the vessel rotates around a central axis running from port to starboard. As will be discussed further below, the roll and pitch information may be provided to the Kalman filter 345 for augmenting navigation and location information in accordance with an illustrative embodiment of the present invention.

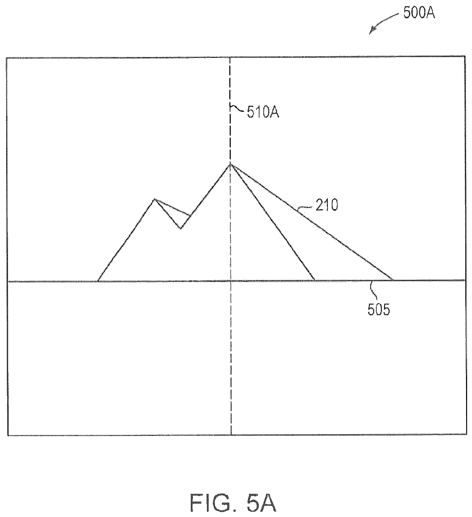

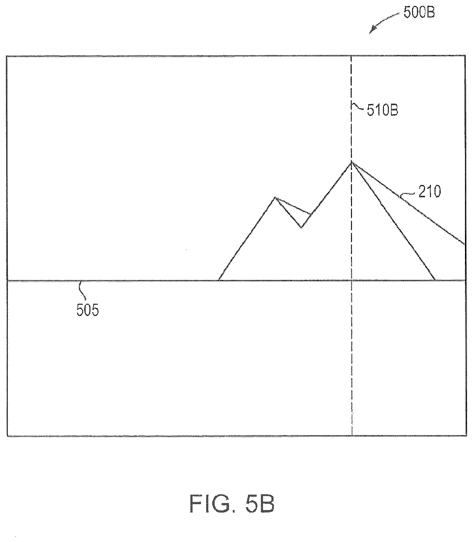

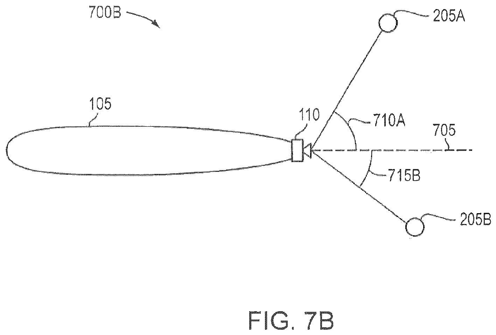

Fig. 5A is an exemplary image 500A that may be used for tracking features for determining headings in accordance with illustrative embodiment of the present invention. Illustratively, the acquired image 500A is of a naturally occurring feature, such as a mountain 210. The vision system illustratively identifies a horizon line 505, described above in relation to Fig. 4, as well as a heading line 510A that is centered on a particular point of the feature 210. In the illustrative image 500A, the heading line 510A is associated with a peak of a geographic feature 210. As the vessel moves during navigation, the location of the feature 210 will move within the fixed field of view of the image acquisition device. Fig. 5B is an exemplary image 500B that may be used for tracking features for determining headings in accordance with an illustrative embodiment of the present invention. The image 500B is of the same geographic feature 210 as in Fig. 5A; however, through continued movement of the vessel, the heading indicator 510B has moved as the feature 210 has moved within the fixed field of view of the image 500B. As described below in relation to Figs. 7A,B, by calculating relative angles and the changes between them in a plurality of time stamped acquired images, the vision system may determine heading and velocity information for the vessel.

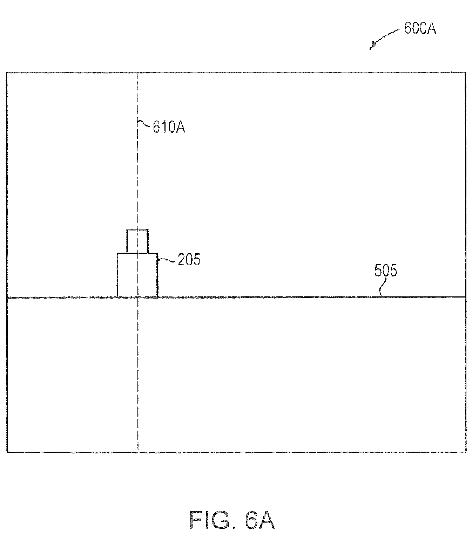

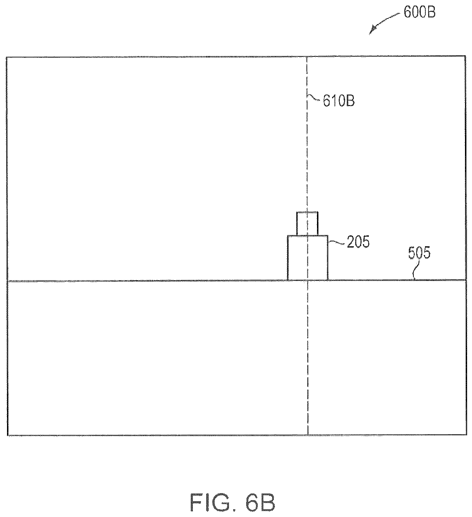

Fig. 6A is an exemplary image 600A that may be used for tracking a known target for determining headings in accordance with an illustrative embodiment of the present invention. The image 600A includes a horizon line 505 that may be determined using any of the techniques described above in relation to Fig. 4. Within the acquired image 600A is a known target 205. The vision system determines a heading indicator 610A centered on the target 205. As the vessel moves and additional images are acquired, such as exemplary image 600B (Fig. 6B), the heading indicator 610B will be shifted. The vision system may, using the differences between the two heading indicators 610A,B, to determine the heading and velocity of the vessel. The calculation of heading and velocity information is described further below in relation to Figs. 7A,B.

Fig. 7A is an exemplary diagram illustrating the calculation of angles between the dynamic vessel 105 and a set of known location targets 205A,B in accordance with an illustrative embodiment of the present invention. Illustratively, within image 700A, the known location targets 205A, B may represent buoys at known locations. However, in accordance with an alternative embodiment of the present invention, targets may comprise known geographic features (such as those described in relation to Figs. 5A,B) and/or targets 220 fixed to known man made locations 215 such as a building. As such, the description of buoys at known locations should be taken as exemplary only. Within image 700A, the vessel 105 is on a heading represented by dashed line 705. Heading 705 is at centerline of the vessel 105 and also illustratively represents the center of the field of view of image acquisition device 110. While, this description is written in terms of the image acquisition devices having a fixed field of view directed along the heading 705 of the vessel 105, it should be noted that in alternative embodiments of the present invention image acquisition devices 110 may be positioned having fields of view that are not aligned with the heading 705 of the vessel. In such alternative embodiments, correction factors may need to be utilized to determine proper relative angles. As such, the description of the image acquisition device being aligned with the heading 705 of the vessel 105 should be taken as exemplary only. Within the fixed field of view of the image acquisition device is a first target 205A and a second target 205B as described above in relation to Fig. 2. A first relative angle 710A may be determined between the centerline 705 and the first target 205A. Similarly, a second relative angle 715B may be determined between the centerline 705 and the second target 205B. The vision system may, by using the known locations of the two targets 205A,B and the two relative angles, determine the location of the vessel using conventional triangulation techniques. As the vessel 105 moves along its heading 705, a later acquired image 700B (Fig. 7B) that also encompasses the first and second sets targets 205A, B is acquired. Utilizing the second acquired image, a second relative angle 710A is determined between the centerline and the first target 205A. Similarly, a second relative angle 715B is determined between the centerline 705 and the second target 205B. Again, the vision system may use the second acquired image to determine the location of the vessel. As each of the images is time stamped by the clock 340, the vision system has determined the location of the vessel at two points in time. By calculating the difference in locations between two images, the vision system may determine the heading and velocity of the vessel. Illustratively, the heading and velocity information is forwarded to the Kalman filter 345 for use in augmenting the GNSS/INS system.

In an alternative embodiment of the present invention, the fixed field of view of the image acquisition device may capture certain celestial objects, such as the sun, the moon and/or stars in the night sky. In response to these celestial objects being within the fixed field of view, the vision system may utilize information relating to them to determine certain position information. For example, the height above the horizon of certain celestial objects in combination with the current time may enable to vision system to function similar to a sextant and provide latitude and/or longitude information for the low dynamic vessel. Similarly, by identifying the location of certain stars, location information may be determined. In such embodiments where celestial objects are within the fixed field of view, any computed location information may be fed into the Kalman filter as additional vision system location information to provide additional accuracy when operating in low dynamic environments

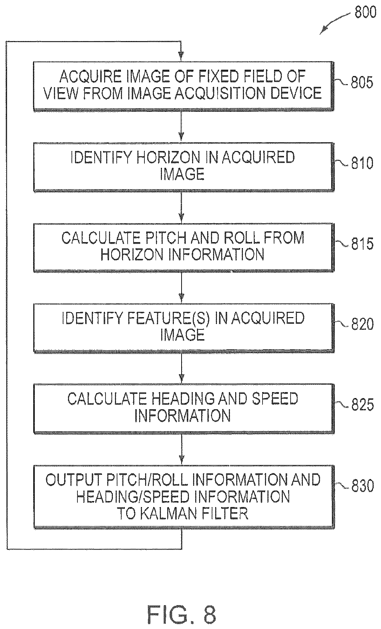

Fig. 8 is a flowchart detailing the steps of the procedure 800 for using a vision system to augment a GNSS/INS system for a low dynamic vessel in accordance with an illustrative embodiment of the present invention. Procedure 800 begins in state 805 where an image of the fixed field of view is acquired by an image acquisition device. Illustratively, the image acquisition device comprises a video camera that acquires a plurality of images per second. In accordance with an illustrative embodiment of the present invention, each of the acquired images is time stamped by the clock 340 so that calculations performed thereon are associated with a particular point in time. Once the image has been acquired, the vision system then, in step 810, identifies the horizon in the acquired image. As noted above in reference to Fig. 4, calculating the horizon may be performed using one of a variety of machine vision techniques including, for example, edge detection techniques. Once the horizon has been calculated in the acquired image, the vision system then, at step 815, calculates the pitch and roll of the vessel utilizing the horizon information. As described above in relation to Fig. 4, the roll of the vessel may be determined from the slope of the horizon. Similarly, the pitch of the vessel may be calculated by comparing the location of the horizon line within the fixed field of view. That is, as the horizon line moves up or down to the fixed field of view, the calculation may be performed to determine the pitch of the vessel in accordance with an illustrative embodiment of the present invention.

The vision system also identifies any features in the acquired image in step 820. Illustratively, these features may comprise geographic features that are at known locations, buoys moored at predefined locations, etc. The acquisition of features from the acquired image are described above in relation to Figs. 5 and 6. Then, in step 825, the vision system calculates heading and velocity information related to the vessel based on the acquired images. As described above in relation to Figs. 7A,B, the vision system determines the heading and velocity of the vessel using relative angles to targets having a predefined and known location. The vision system then outputs the pitch/roll information as well as the heading and velocity information to the Kalman filter 345 in step 830. The procedure 800 then loops back to step 805.

## Claims

1. A system for use in a vessel comprising:
a GNSS system (325) configured to provide GNSS location information related to the vessel;
an inertial navigation system (320) operatively interconnected with the GNSS system (325), the inertial system (320) configured to provide inertial location information related to the vessel (105);
an image capture device (110) configured to obtain one or more images of a fixed field of view;
a vision system (335) configured to determine vision system location information using the captured one or more images whereby determining vision system location information using the captured one or more images comprises determining a horizon line in the one or more acquired images;
a Kalman filter (345) configured to determine a location of the vessel (105) using the GNSS location information, the inertial location information and the vision system location information;
wherein a weighting of the vision system location information is increased in the Kalman filter (345) and a weighting of the inertial location information is decreased in the Kalman filter (345) when the vessel (105) is operating under low dynamic conditions; and
wherein the weighting of the vision system location information is decreased in the Kalman filter (345) and the weighting of the inertial location information is increased in the Kalman filter (345) when the vessel (105) is operating under non-low dynamic conditions,
**characterized in that**
the captured one or more images are timestamped to a common clock (340) that is shared by the GNSS system (325), the inertial navigation system (320), the image capture device (110) and the vision system (335).

2. The system of claim 1 wherein the vision system (335) is further configured to determine slope of the horizon line.

3. The system of claim 1 wherein the vision system location information comprises a roll of the vessel.

4. The system of claim 1 wherein the vision system location information comprises a pitch of the vessel.

5. The system of claim 1 wherein the vision system location information comprises a heading of the vessel.

6. The system of claim 1 wherein the vision system location information comprises a velocity of the vessel.

7. The system of claim 1 wherein the vision system (345) is configured to calculate a relative angle between the vessel (105) and a predefined target located within one of the one or more acquired images.

8. A method for use in a vessel comprising:
using a GNSS system (325) to determine a set of GNSS location information;
using an inertial system (320) to determine a set of inertial location information;
obtaining one or more images using an image acquisition device (110) having a fixed field of view;
using a vision system (335) to obtain a set of vision system location information using the obtained one or more images wherein using the vision system (335) to obtain the set of vision system location information using the obtained one or more images comprises determining a horizon in the one or more acquired images;
using a Kalman filter (345) to determine a set of location information for the vessel (105), wherein the Kalman filter (345) uses one or more of the set of GNSS location information, the inertial location information and the vision system location information; and
in response to the vessel (105) experiencing a low dynamic environment, decreasing a weighting of the inertial location information and increasing a weighting of the vision system location information,
**characterized in that**
the captured one or more images are timestamped to a common clock (340) that is shared by the GNSS system (325), the inertial navigation system (320), the image capture device (110) and the vision system (335).

9. The method of claim 8 further comprising in response to the vessel (105) experiencing a non-low dynamic environment, increasing the weighting of the inertial location information and decreasing the weighting of the vision system location information.

10. The method of claim 8 wherein using the vision system (335) to obtain the set of vision system location information comprises determining roll of the vessel (105).

11. The method of claim 8 wherein using the vision system (335) to obtain the set of vision system location information comprises determining pitch of the vessel (105).

12. The method of claim 8 further comprising time stamping each of the one or more images, wherein the time stamp is from a clock (340) associated with the GNSS (325) and inertial systems (320).

13. The method of claim 8 wherein the one or more images comprises an image of a celestial object and wherein the set of vision system location information comprises location information from the image of the celestial object.

## Patentansprüche

1. System zur Verwendung in einem Schiff, umfassend:
ein GNSS-System (325), das dazu eingerichtet ist, auf das Schiff bezogene GNSS-Standortinformationen bereitzustellen;
ein inertiales Navigationssystem (320), das mit dem GNSS-System (325) in Wirkverbindung steht, wobei das inertiale System (320) dazu eingerichtet ist, auf das Schiff (105) bezogene inertiale Standortinformationen bereitzustellen;
eine Bilderfassungsvorrichtung (110), die dazu eingerichtet ist, ein oder mehrere Bilder eines fixierten Sichtfeldes zu erhalten;
ein Sichtsystem (335), das dazu eingerichtet ist, Sichtsystem-Standortinformationen mittels des einen oder der mehreren erfassten Bilder zu ermitteln, wobei das Ermitteln der Sichtsystem-Standortinformationen mittels des einen oder der mehreren erfassten Bilder das Ermitteln einer Horizontlinie in dem einen oder den mehreren erfassten Bildern umfasst;
ein Kalman-Filter (345), das dazu eingerichtet ist, einen Standort des Schiffs (105) mittels der GNSS-Standortinformationen, der inertialen Standortinformationen und der Sichtsystem-Standortinformationen zu ermitteln;
wobei eine Gewichtung der Sichtsystem-Standortinformationen in dem Kalman-Filter (345) erhöht und eine Gewichtung der inertialen Standortinformationen in dem Kalman-Filter (345) verringert wird, wenn das Schiff (105) unter gering dynamischen Bedingungen operiert, und
wobei die Gewichtung der Sichtsystem-Standortinformationen in dem Kalman-Filter (345) verringert und die Gewichtung der inertialen Standortinformationen in dem Kalman-Filter (345) erhöht wird, wenn das Schiff (105) unter nicht-gering dynamischen Bedingungen operiert,
**dadurch gekennzeichnet, dass**
das eine oder die mehreren erfassten Bilder nach einer gemeinsamen Uhr (340) zeitgestempelt sind, die von dem GNSS-System (325), dem inertialen Navigationssystem (320), der Bilderfassungsvorrichtung (110) und dem Sichtsystem (335) geteilt wird.

2. System nach Anspruch 1, wobei das Sichtsystem (335) ferner dazu eingerichtet ist, die Neigung der Horizontlinie zu bestimmen.

3. System nach Anspruch 1, wobei die Sichtsystem-Standortinformationen ein Rollen des Schiffs umfassen.

4. System nach Anspruch 1, wobei die Sichtsystem-Standortinformationen ein Stampfen des Schiffs umfassen.

5. System nach Anspruch 1, wobei die Sichtsystem-Standortinformationen einen Kurs des Schiffs umfassen.

6. System nach Anspruch 1, wobei die Sichtsystem-Standortinformationen eine Geschwindigkeit des Schiffs umfassen.

7. System nach Anspruch 1, wobei das Sichtsystem (345) dazu eingerichtet ist, einen relativen Winkel zwischen dem Schiff (105) und einem vordefinierten Ziel, das in einem der einen oder mehreren erfassten Bilder liegt, zu berechnen.

8. Verfahren zur Anwendung in einem Schiff, umfassend die Schritte:
Nutzen eines GNSS-Systems (325) zum Bestimmen eines Satzes von GNSS-Standortinformationen;
Nutzen eines inertialen Systems (320) zum Bestimmen eines Satzes von inertialen Standortinformationen;
Erhalten eines oder mehrerer Bilder mit einer Bilderfassungsvorrichtung (110), die ein fixiertes Sichtfeld aufweist;
Nutzen eines Sichtsystems (335), um einen Satz von Sichtsystem-Standortinformationen mittels des einen oder der mehreren erhaltenen Bilder zu erhalten, wobei das Nutzen des Sichtsystems (335) zum Erhalten des Satzes von Sichtsystem-Standortinformationen mittels des einen oder der mehreren erhaltenen Bilder das Ermitteln eines Horizontes in dem einen oder den mehreren erfassten Bildern umfasst;
Nutzen eines Kalman-Filters (345), um einen Satz von Standortinformationen für das Schiff (105) zu ermitteln, wobei das Kalman-Filter (345) einen oder mehrere der Sätze von GNSS-Standortinformationen, inertialen Standortinformationen und Sichtsystem-Standortinformationen nutzt, und
als Reaktion darauf, dass das Schiff (105) einer geringdynamischen Umgebung ausgesetzt ist: Verringern einer Gewichtung der inertialen Standortinformationen und Erhöhen einer Gewichtung der Sichtsystem-Standortinformationen,
**dadurch gekennzeichnet, dass**
das eine oder die mehreren erfassten Bilder nach einer gemeinsamen Uhr (340) zeitgestempelt sind, die von dem GNSS-System (325), dem inertialen Navigationssystem (320), der Bilderfassungsvorrichtung (110) und dem Sichtsystem (335) geteilt wird.

9. Verfahren nach Anspruch 8, ferner umfassend, als Reaktion darauf, dass das Schiff (105) einer nichtgeringdynamischen Umgebung ausgesetzt ist: Erhöhen der Gewichtung der inertialen Standortinformationen und Verringern der Gewichtung der Sichtsystem-Standortinformationen.

10. Verfahren nach Anspruch 8, wobei das Benutzen des Sichtsystems (335) zum Erhalten des Satzes von Sichtsystem-Standortinformationen das Bestimmen eines Rollens des Schiffs (105) umfasst.

11. Verfahren nach Anspruch 8, wobei das Benutzen des Sichtsystems (335) zum Erhalten des Satzes von Sichtsystem-Standortinformationen das Bestimmen eines Stampfens des Schiffs (105) umfasst.

12. Verfahren nach Anspruch 8, ferner umfassend das Zeitstempeln jedes der einen oder mehreren Bilder, wobei der Zeitstempel von einer Uhr (340) kommt, die dem GNSS-System (325) und dem inertialen System (320) zugeordnet ist.

13. Verfahren nach Anspruch 8, wobei das eine oder die mehreren Bilder ein Bild eines Himmelsobjektes umfassen und wobei der Satz von Sichtsystem-Standortinformationen Standortinformationen aus dem Bild des Himmelsobjektes umfasst.

## Revendications

1. Système destiné à être utilisé dans un navire, comprenant :
un système GNSS (325) configuré pour fournir des informations de localisation GNSS relatives au navire ;
un système de navigation inertielle (320) interconnecté fonctionnellement avec le système GNSS (325), le système inertiel (320) étant configuré pour fournir des informations de localisation inertielle relatives au navire (105) ;
un dispositif de capture d'images (110) configuré pour obtenir une ou plusieurs images d'un champ de vision fixe ;
un système de vision (335) configuré pour déterminer des informations de localisation de système de vision en utilisant lesdites une ou plusieurs images capturées, la détermination des informations de localisation de système de vision en utilisant lesdites une ou plusieurs images capturées comprenant la détermination d'une ligne d'horizon dans lesdites une ou plusieurs images acquises ;
un filtre de Kalman (345) configuré pour déterminer une localisation du navire (105) en utilisant les informations de localisation GNSS, les informations de localisation inertielle et les informations de localisation de système de vision ;
dans lequel une pondération des informations de localisation de système de vision est augmentée dans le filtre de Kalman (345) et une pondération des informations de localisation inertielle est diminuée dans le filtre de Kalman (345) lorsque le navire (105) est exploité dans des conditions de faible dynamique ; et
dans lequel la pondération des informations de localisation de système de vision est diminuée dans le filtre de Kalman (345) et la pondération des informations de localisation inertielle est augmentée dans le filtre de Kalman (345) lorsque le navire (105) est exploité dans des conditions de dynamique non faible,
**caractérisé en ce que**
lesdites une ou plusieurs images capturées sont horodatées par une horloge commune (340) qui est partagée par le système GNSS (325), le système de navigation inertielle (320), le dispositif de capture d'images (110) et le système de vision (335).

2. Système selon la revendication 1, dans lequel le système de vision (335) est en outre configuré pour déterminer la pente de la ligne d'horizon.

3. Système selon la revendication 1, dans lequel les informations de localisation de système de vision comprennent un roulis du navire.

4. Système selon la revendication 1, dans lequel les informations de localisation de système de vision comprennent un tangage du navire.

5. Système selon la revendication 1, dans lequel les informations de localisation de système de vision comprennent un cap du navire.

6. Système selon la revendication 1, dans lequel les informations de localisation de système de vision comprennent une vitesse du navire.

7. Système selon la revendication 1, dans lequel le système de vision (345) est configuré pour calculer un angle relatif entre le navire (105) et une cible prédéfinie située dans l'une desdites une ou plusieurs images acquises.

8. Procédé destiné à être utilisé dans un navire, consistant à :
utiliser un système GNSS (325) pour déterminer un ensemble d'informations de localisation GNSS ;
utiliser un système inertiel (320) pour déterminer un ensemble d'informations de localisation inertielle ;
obtenir une ou plusieurs images en utilisant un dispositif d'acquisition d'images (110) ayant un champ de vision fixe ;
utiliser un système de vision (335) pour obtenir un ensemble d'informations de localisation de système de vision en utilisant lesdites une ou plusieurs images obtenues, l'utilisation du système de vision (335) pour obtenir l'ensemble d'informations de localisation de système de vision en utilisant lesdites une ou plusieurs images obtenues comprenant la détermination d'un horizon dans lesdites une ou plusieurs images acquises ;
utiliser un filtre de Kalman (345) pour déterminer un ensemble d'informations de localisation pour le navire (105), le filtre de Kalman (345) utilisant un ou plusieurs parmi l'ensemble d'informations de localisation GNSS, l'ensemble d'informations de localisation inertielle et l'ensemble d'informations de localisation de système de vision ; et
en réponse au fait que le navire (105) rencontre un environnement à faible dynamique, diminuer une pondération des informations de localisation inertielle et augmenter une pondération des informations de localisation de système de vision,
**caractérisé en ce que**
lesdites une ou plusieurs images capturées sont horodatées par une horloge commune (340) qui est partagée par le système GNSS (325), le système de navigation inertielle (320), le dispositif de capture d'images (110) et le système de vision (335).

9. Procédé selon la revendication 8, consistant en outre à, en réponse au fait que le navire (105) rencontre un environnement à dynamique non faible, augmenter la pondération des informations de localisation inertielle et diminuer la pondération des informations de localisation de système de vision.

10. Procédé selon la revendication 8, dans lequel l'utilisation du système de vision (335) pour obtenir l'ensemble d'informations de localisation de système de vision comprend la détermination du roulis du navire (105).

11. Procédé selon la revendication 8, dans lequel l'utilisation du système de vision (335) pour obtenir l'ensemble d'informations de localisation de système de vision comprend la détermination du tangage du navire (105).

12. Procédé selon la revendication 8, consistant en outre à horodater chacune desdites une ou plusieurs images, l'horodatage provenant d'une horloge (340) associée aux systèmes GNSS (325) et inertiel (320).

13. Procédé selon la revendication 8, dans lequel lesdites une ou plusieurs images comprennent une image d'un objet céleste et dans lequel l'ensemble d'informations de localisation de système de vision comprend des informations de localisation obtenues à partir de l'image de l'objet céleste.
